# EUROPEAN PATENT APPLICATION

(11) **EP 4 177 455 A1**
(43) Date of publication of application: **10.05.2023**
(21) Application number: 22205586.5
(22) Date of filing: 04.11.2022
(51) Int. Cl.: F02G 1/053

(54) **STIRLING ENGINE**

(30) Priority: 09.11.2021 JP 2021182823
(71) Applicant: Yanmar Holdings Co., Ltd., Osaka-shi, Osaka (JP)
(72) Inventor: KITAZAKI, Masato, Osaka (JP); YOSHIZUKA, Toru, Osaka (JP); SAKAMOTO, Osamu, Maibara, Shiga (JP)
(74) Representative: Dennemeyer & Associates S.A.

(57) **Abstract**

[Problem] To provide a Stirling engine having a function of an oil seal and including a high-pressure gas seal suitable for the Stirling engine.

[Solution] A Stirling engine 10 including a crosshead mechanism includes a low-pressure space 114 and a high-pressure space 115. In the high-pressure space 115, a piston 112 is driven by a heating/cooling cycle of a working fluid. The low-pressure space 114 accommodates a crosshead portion 116 connected to the piston 112 via a piston rod 118, and a crank mechanism that rotates a crankshaft 113 along with movement of the crosshead portion 116. A high-pressure gas seal 119 in which a lip angle of a seal lip on the high-pressure side is smaller than that on the low-pressure side is provided around the piston rod 118 at a partition between the low-pressure space 114 and the high-pressure space 115.

## Description

### TECHNICAL FIELD

The present invention relates to a Stirling engine including a crosshead mechanism.

### BACKGROUND ART

In a Stirling engine including a crosshead mechanism, an inexpensive member (for example, a cylinder block of a general-purpose internal combustion engine) may be used as a crankcase that houses a crank mechanism from a crosshead portion to a crankshaft for the purpose of reducing manufacturing cost. In addition, in the Stirling engine, a high-pressure gas seal is installed on the piston rod to seal the high-pressure gas (working fluid) in the operation space so that the high-pressure gas does not leak to the crankcase. At this time, lubricating oil is applied to the piston rod for the purpose of lubricating the piston rod against the high-pressure gas seal. However, when a large amount of oil intrudes into the operating space on the high-pressure side, the heat exchanger becomes clogged to decrease engine output. Patent Document 1 discloses that an oil scraper is installed to restrain intrusion of oil to the high-pressure side.

### PRIOR ART DOCUMENT

### PATENT DOCUMENT

Patent Document 1: Japanese Patent No. 5945574

### SUMMARY OF INVENTION

### TECHNICAL PROBLEM

In the configuration of Patent Document 1, both a high-pressure gas seal and an oil scraper are required, which causes an issue of cost increase. In addition, in this configuration, the intrusion of oil into the high-pressure portion cannot be completely stopped, and the oil having partially intruded into the high-pressure side cannot be removed.

The cost can be reduced by providing a high-pressure gas seal with a function of an oil seal and omitting an oil scraper. However, in a Stirling engine, there is a unique condition that a low-pressure side is an oil-tight side. Thus, a high-pressure gas seal proposed for a Stirling engine is not found in the prior art.

The present invention has been made in view of the above issues. An object of the present invention is to provide a Stirling engine that has a function of an oil seal and includes a high-pressure gas seal suitable for the Stirling engine.

### SOLUTION TO PROBLEM

In order to solve the above issues, a Stirling engine of the present invention is a Stirling engine including a crosshead mechanism. The Stirling engine includes: a high-pressure space in which a piston is driven by a heating/cooling cycle of a working fluid; and a low-pressure space in which a crosshead portion connected to the piston via a piston rod and a crank mechanism that rotates a crankshaft along with movement of the crosshead portion are stored. A gas seal is provided around the piston rod at a partition between the low-pressure space and the high-pressure space such that a lip angle of a seal lip is made smaller on a high-pressure side than on a low-pressure side.

According to the above configuration, a lubricating oil adhering to the surface of the piston rod is transported to the high-pressure side in the pulling stroke of the piston rod (stroke from the bottom dead center position to the top dead center position), but is scraped out to the low-pressure side by the gas seal due to the difference in lip angle between the high-pressure side and the low-pressure side in the gas seal. Accordingly, the gas seal can also serve as an oil seal, and no oil scraper or the like is required, so that the cost of the Stirling engine can be reduced.

In the Stirling engine, a member forming the low-pressure space and a member forming the high-pressure space may be separate members.

According to the above configuration, a cylinder block or the like (that is, inexpensive mass production components) of a general-purpose internal combustion engine (for example, a diesel engine) can be used as the member forming the low-pressure space, so that the manufacturing cost of the Stirling engine can be reduced. The cylinder block of the general-purpose internal combustion engine also includes a crank mechanism, an oil circulation system, and the like, which can also be used in the Stirling engine.

In the Stirling engine, the crosshead portion may be provided with a through hole penetrating along a sliding direction thereof.

According to the above configuration, it is possible to prevent the air in the upper space of the crosshead portion from being compressed when the crosshead portion rises and from becoming a movement resistance of the crosshead portion. In addition, the lubricating oil scattered in the low-pressure space (in a crankcase) can be sent to the portion above the crosshead portion through the through hole to satisfactorily lubricate the gas seal.

In the Stirling engine, the crosshead portion may not include a seal ring between the crosshead portion and a cylinder liner that holds sliding of the crosshead portion.

According to the above configuration, since the seal rings are not provided, it is possible to increase the gap area between the crosshead portion and the cylinder liner, and increase the amount of lubricating oil transferred from the crankcase to the portion above the crosshead portion. In addition, since the air can move through the gap between the crosshead portion and the cylinder liner, the movement resistance of the crosshead portion due to the air compression can also be reduced.

The Stirling engine may include a splash-type oil circulation system that splashes lubricating oil, accumulated in a lower portion of the crankcase, to an upper portion using rotation of the crankshaft, a dust seal may be arranged at a lower stage of the gas seal, and a first communication path that connects an upper side of the dust seal and the low-pressure space may be provided between the dust seal and the gas seal.

According to the above configuration, the lubricating oil accumulated in the portion above the dust seal can be released to the low-pressure space by the first communication path, so that the adverse effect of the oil accumulation pressure caused by the dust seal can be prevented.

The Stirling engine may include a splash-type oil circulation system that splashes the lubricating oil, accumulated in the lower portion of the crankcase, to the upper portion using the rotation of the crankshaft, the gas seals may be arranged in multiple stages, a dust seal may be arranged in a lower stage of the gas seal, and a second communication path that connects a portion between the gas seals provided in the multiple stages and the high-pressure space, and a check valve arranged on the second communication path may be provided.

According to the above configuration, the lubricating oil accumulated on the portion above the dust seal can be released to the high-pressure space by the second communication path, so that the adverse effect of the oil accumulation pressure caused by the dust seal can be prevented. In addition, since the working fluid having intruded between the gas seals can be returned to the high-pressure space, the gas sealing properties of the high-pressure space can be secured.

The Stirling engine may include: an oil collection unit that collects the lubricating oil used for lubricating the gas seal; and an oil feed tank that is connected to the oil collection unit via an oil pump and a check valve and into which the lubricating oil is fed from the oil collection unit by the oil pump, and the oil feed tank may be configured to feed the lubricating oil to the gas seal from above.

According to the above configuration, using the oil pump-type oil circulation system makes it possible to stably supply the lubricating oil to the gas seal regardless of the engine operating state (rotation speed) as compared with using the splash-type oil circulation system.

In addition, the Stirling engine may include a cooling water circulation system in which a water cooling jacket is provided around the gas seal and cooling water can be supplied to the water cooling jacket.

According to the above configuration, cooling the gas seal makes it possible to restrain the thermal expansion of the gas seal due to the frictional heat.

In the Stirling engine, the cooling water circulation system may include a bypass path and a bypass valve arranged on the bypass path, and a temperature of the cooling water supplied to the water cooling jacket can be adjusted by adjusting an opening degree of the bypass valve.

According to the above configuration, the temperature of the gas seal can be controlled within an appropriate temperature range according to the operating conditions, and lubricity and sealing properties of the gas seal can be maintained.

### ADVANTAGEOUS EFFECTS OF INVENTION

The Stirling engine of the present invention has an effect of providing a gas seal with a function of an oil seal (making the gas seal suitable for the Stirling engine), eliminating the need for an oil scraper or the like, and reducing the cost of the Stirling engine.

### BRIEF DESCRIPTION OF DRAWINGS

Fig. 1 is a schematic diagram illustrating a schematic configuration of a Stirling engine;
Fig. 2 is a schematic diagram illustrating a schematic configuration of an engine unit in the Stirling engine;
Fig. 3A is a schematic view of a structure in which a general rod seal is used as a high-pressure gas seal, and Fig. 3B is a schematic diagram illustrating a structure of a high-pressure gas seal according to an embodiment of the present invention;
Fig. 4 is a schematic view of an oil supply mechanism according to a third embodiment;
Fig. 5 is a schematic view of a configuration near a high-pressure gas seal in a fourth embodiment;
Fig. 6 is a schematic view of a configuration near the high-pressure gas seal in the fourth embodiment; and
Fig. 7 is a schematic diagram illustrating a cooling water circulation system according to a fifth embodiment.

### DESCRIPTION OF EMBODIMENTS

### [First Embodiment]

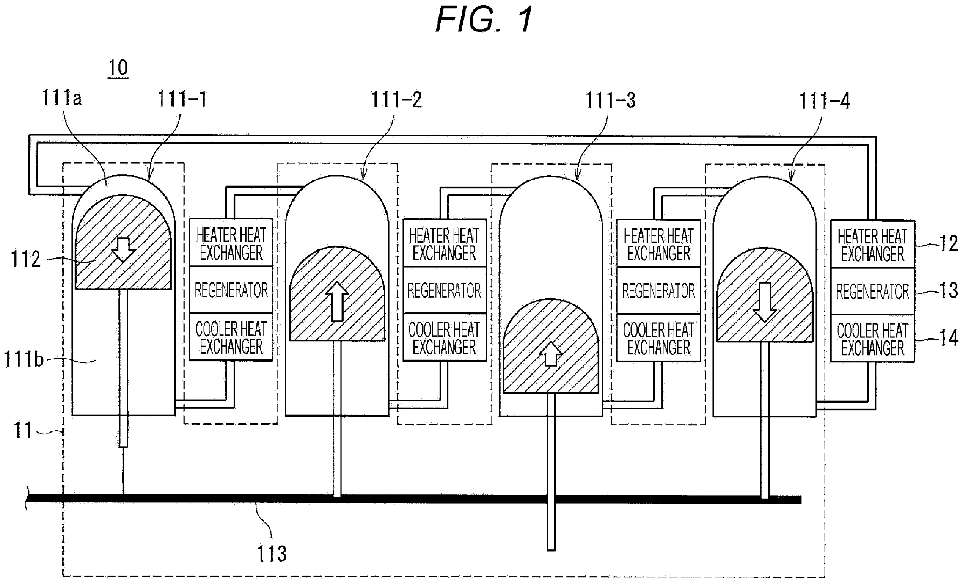

Hereinafter, embodiments of the present invention will be described in detail with reference to the drawings. Fig. 1 is a schematic diagram illustrating a schematic configuration of a Stirling engine 10.

As illustrated in Fig. 1, the Stirling engine 10 includes an engine unit 11, a heater heat exchanger 12, a regenerator 13, and a cooler heat exchanger 14. In the Stirling engine 10, a power generator (not illustrated) is connected to a crankshaft 113 of the engine unit 11, so that power can be generated by the power generator by driving the Stirling engine 10.

In the Stirling engine 10, the heater heat exchanger 12 is inserted into a high-temperature heat source (for example, a high-temperature pipe through which a high-temperature fluid flows), and a working fluid (for example, helium gas) is heated in the heater heat exchanger 12. Furthermore, in the cooler heat exchanger 14, the working fluid is cooled by cooling water (cooling water supply means is not illustrated). The Stirling engine 10 is designed to drive the engine unit 11 by the movement of the working fluid thus heated/cooled. Although the engine unit 11 may be a single-cylinder type engine or a multi-cylinder type engine, a four-cylinder double-acting engine is exemplified in the first embodiment.

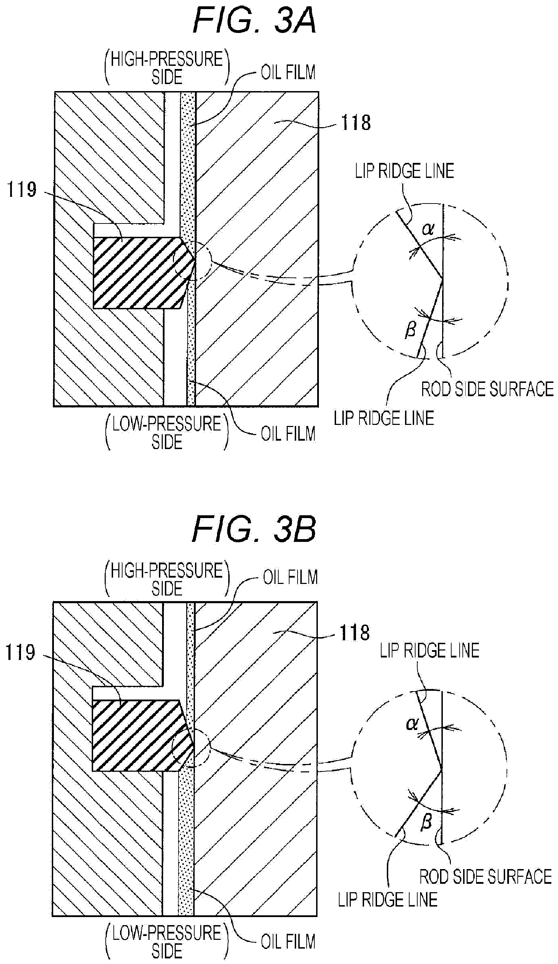

As illustrated in Figs. 3A and 3B, the engine unit 11 includes four cylinders 111-1 to 111-4 (simply referred to as cylinders 111 unless otherwise distinguished). In this example, the four cylinders arranged linearly with respect to the crankshaft 113 are set as the cylinders 111-1 to 111-4 according to the arrangement order. Each cylinder 111 is provided with a piston 112, a high-temperature chamber 111a is provided on one side (upper side in Fig. 1) with respect to a sliding direction (up-down direction in Fig. 1) of the piston 112, and a low-temperature chamber 111b is provided on the other side (lower side in Fig. 1). The high-temperature chamber 111a is connected to the heater heat exchanger 12, and the low-temperature chamber 111b is connected to the cooler heat exchanger 14. The heater heat exchanger 12 and the cooler heat exchanger 14 are connected to each other with the regenerator 13 interposed therebetween. The regenerator 13 serves as a heat storage means between the heater heat exchanger 12 and the cooler heat exchanger 14, and accumulates heat from the working fluid when the working fluid moves from the heater heat exchanger 12 to the cooler heat exchanger 14 and causes the working fluid to recover the heat when the working fluid flows in the opposite direction to the heater heat exchanger 12, thereby effectively utilizing the heat. In the four-cylinder double-acting engine illustrated in Fig. 1, the heater heat exchanger 12 and the cooler heat exchanger 14 connected with the same regenerator 13 interposed therebetween are connected to different cylinders 111.

The operation of the Stirling engine 10 is established by repeating a cycle in which the pistons 112 in the cylinders 111 sequentially take a first position (top dead center position: cylinder 111-1 in Fig. 1), a second position (a position at which the crankshaft 113 is rotated 90° from the top dead center position while the piston 112 moves downward: the cylinder 111-4 in Fig. 1), a third position (bottom dead center position: cylinder 111-3 in Fig. 1), and a fourth position (a position at which the crankshaft 113 is rotated 90° from the bottom dead center position while the piston 112 moves upward: the cylinder 111-2 in Fig. 1).

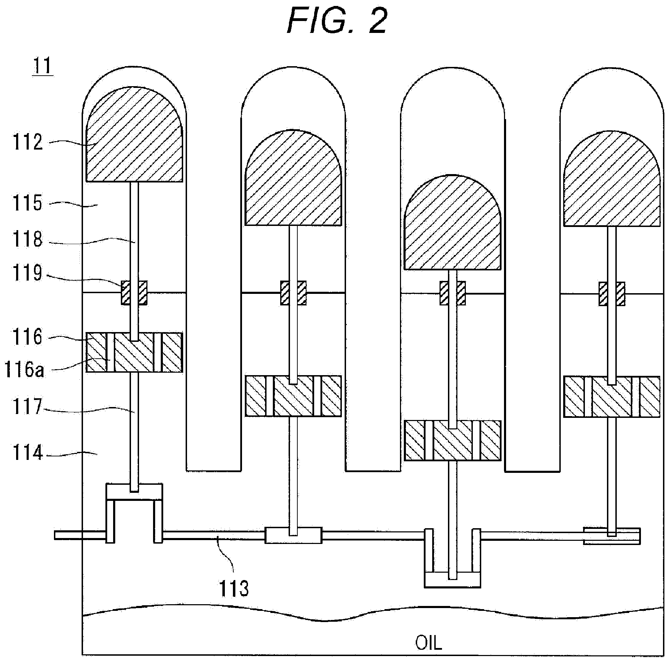

Fig. 2 is a schematic diagram illustrating a schematic configuration of the engine unit 11 in the Stirling engine 10. The engine unit 11 of Fig. 2 has a crosshead mechanism in which a cylinder block of a general-purpose internal combustion engine (for example, a diesel engine) is used as a part of a structure in order to reduce manufacturing cost, and a piston component of the general-purpose internal combustion engine is used as the crosshead portion 116. That is, in the engine unit 11 of Fig. 2, the low-pressure space 114 is formed by the cylinder block of the general-purpose internal combustion engine, and the crosshead portion 116 is arranged in the low-pressure space 114. In the low-pressure space 114, the crosshead portion 116 is connected to the crankshaft 113 via a connecting rod 117. A crank mechanism that rotates the crankshaft 113 along with the movement of the crosshead portion 116 (that is, a mechanism including the crosshead portion 116, the connecting rod 117, and the crankshaft 113) also incorporates the cylinder block of the general-purpose internal combustion engine.

Above the low-pressure space 114, a high-pressure space 115 (the high-temperature chamber 111a and the low-temperature chamber 111b in Fig. 1 are both included in high-pressure space 115) of each cylinder 111 is provided, and the piston 112 of each cylinder 111 is arranged in the high-pressure space 115. That is, in the high-pressure space 115, the piston 112 is driven by the heating/cooling cycle of the working fluid. The high-pressure space 115 is formed as a member separate from the cylinder block of the general-purpose internal combustion engine forming the low-pressure space 114. The piston 112 and the crosshead portion 116 are connected by a piston rod 118. That is, the piston 112, the piston rod 118, and the crosshead portion 116 integrally reciprocate along a predetermined sliding direction (up-down direction in Fig. 2).

At a partition between the low-pressure space 114 and the high-pressure space 115, a high-pressure gas seal (gas seal) 119 is installed around the piston rod 118 so that the working fluid does not leak from the high-pressure space 115 to the low-pressure space 114. Oil (lubricating oil) is supplied to the high-pressure gas seal 119 for lubrication between the piston rod 118 and the high-pressure gas seal 119. Therefore, the oil supplied from the crankcase to the bearing or the like is also fed to the piston rod 118. An oil circulation system provided in the cylinder block of the general-purpose internal combustion engine can also be used as the oil supply mechanism for the high-pressure gas seal 119. The provided oil circulation system may be an oil pump type or a splash type (splashing oil, accumulated on the oil pan in the lower portion of the crankcase, to the upper portion using the rotation of the crankshaft).

The high-pressure gas seal 119 preferably also serves as an oil seal for preventing intrusion of oil into the high-pressure space 115 from the low-pressure space 114. The high-pressure gas seal 119 may be a rod seal used for general hydraulic equipment and the like. Since the high-pressure side of the general hydraulic equipment is an oil-tight side, when an existing rod seal in the hydraulic equipment is used as the high-pressure gas seal 119 as it is, the lip angle (angle formed by the lip surface and the rod surface in the cross section passing through the central axis of the piston rod 118) of a seal lip on the high-pressure side is larger than that on the low-pressure side (α > β in Fig. 3A) as shown in Fig. 3A, so that it is possible to obtain a structure that prevents the intrusion of oil from the high-pressure side to the low-pressure side. Specifically, the oil film on the surface of the piston rod 118 generated above and below the high-pressure gas seal 119 along with the reciprocating motion of the piston rod 118 becomes thin on the side of the high-pressure gas seal 119 where the lip angle is small (low-pressure side) and becomes thick on the side of the high-pressure gas seal 119 where the lip angle is large (high-pressure side), so that it is possible to prevent the intrusion of oil from the high-pressure side into the low-pressure side.

On the other hand, in the Stirling engine 10, since the low-pressure side is the oil-tight side contrary to the general hydraulic equipment, the high-pressure gas seal 119 needs to prevent the intrusion of oil from the low-pressure side into the high-pressure side. Therefore, when the existing rod seal is used as the high-pressure gas seal 119, oil intrudes from the low-pressure side into the high-pressure side. As a result, the oil is intermittently fed from the low-pressure space 114 to the high-pressure space 115, so that the heat exchanger (the heater heat exchanger 12 and the cooler heat exchanger 14) becomes clogged to cause a decrease in output. In addition, there is a risk that the oil in the crankcase may be exhausted, which causes burning of the drive components.

In order to solve the above issues and allow the high-pressure gas seal 119 to serve also as an oil seal, in the Stirling engine 10 according to the first embodiment, as shown in Fig. 3B, the high-pressure gas seal 119 in the engine unit 11 is structured in which the lip angle of the seal lip is made smaller on the high-pressure side than on the low-pressure side (α < β in Fig. 3B) to prevent the intrusion of oil from the low-pressure side into the high-pressure side.

The component with reference sign "120" illustrated in Figs. 3A and 3B is an O-ring, which is used to adjust the contact pressure (surface pressure) of the high-pressure gas seal 119 on the piston rod 118. The gas sealing performance of the high-pressure gas seal 119 to the working fluid is obtained by the surface pressure of the high-pressure gas seal 119. The gas sealing performance of the high-pressure gas seal 119 having the structure illustrated in Fig. 3B is equivalent to the gas sealing performance of the high-pressure gas seal 119 of Fig. 3A.

In the configuration of Fig. 3B, the oil having intruded into fine asperities on the surface of the piston rod 118 is transported to the high-pressure side in the pulling stroke (stroke from the bottom dead center position to the top dead center position) of the piston rod 118. However, due to the difference in lip angle between the high-pressure side and the low-pressure side in the high-pressure gas seal 119, the oil film on the surface of the piston rod 118 becomes thick on the side where the lip angle is large (low-pressure side) and becomes thin on the side where the lip angle is small (high-pressure side) in the high-pressure gas seal 119. As a result, the oil on the surface of the piston rod 118 is scraped out to the low-pressure side by the high-pressure gas seal 119. This makes it possible to prevent oil from intruding into and staying on the high-pressure side. Since the high-pressure gas seal 119 also serves as an oil seal, an oil scraper is unnecessary, and the cost of the Stirling engine 10 can be reduced.

### [Second Embodiment]

As described above, in an engine unit 11 of a Stirling engine 10, a cylinder block of a general-purpose internal combustion engine is used, and a piston component of the general-purpose internal combustion engine is used as the crosshead portion 116. At this time, if the piston component of the general-purpose internal combustion engine is used as it is as the crosshead portion 116, when the crosshead portion 116 rises in the low-pressure space 114, the air is compressed in the space above the crosshead portion 116. This generates movement resistance in the crosshead portion 116 to decrease the output of the Stirling engine 10.

In order to prevent this, the crosshead portion 116 is provided with (preferably a plurality of) through holes 116a penetrating along the sliding direction (see Fig. 2). Providing the through holes 116a in the crosshead portion 116 makes it possible to reduce the movement resistance of the crosshead portion 116 and prevent the decrease in the output of the Stirling engine 10.

In the engine unit 11, an oil circulation system provided in the cylinder block of the general-purpose internal combustion engine is used in order to supply oil to the high-pressure gas seal 119. However, the oil circulation system provided in the general-purpose internal combustion engine (in particular, a splash-type oil circulation system) is originally intended to supply oil to the piston component of the general-purpose internal combustion engine (that is, the crosshead portion 116) and a bearing of a crank mechanism, and is not intended to supply oil to the high-pressure gas seal 119 above the crosshead portion 116.

On the other hand, providing the through holes 116a in the crosshead portion 116 makes it possible to send the oil scattered in the low-pressure space 114 (in the crankcase) to the portion above the crosshead portion 116 through the through holes 116a, so that the oil can be attached to the piston rod 118 to lubricate the high-pressure gas seal 119. Accordingly, it is possible to prevent abnormal wear of the high-pressure gas seal 119. The through holes 116a are preferably provided at equal angular intervals along the circumferential direction of the crosshead portion 116.

The piston component of the general-purpose internal combustion engine usually has seal rings serving as a gas seal or an oil seal attached to a side surface of the piston. However, the crosshead portion 116 incorporating this piston component is preferably used with these seal rings removed. Accordingly, it is possible to increase the gap area between the crosshead portion 116 and the cylinder liner that holds the sliding of the crosshead portion 116, and increase the amount of oil transferred from the crankcase to the portion above the crosshead portion 116 through this gap. In addition, since the air can move through the gap between the crosshead portion 116 and the cylinder liner, the movement resistance of the crosshead portion 116 due to the air compression can also be reduced.

### [Third Embodiment]

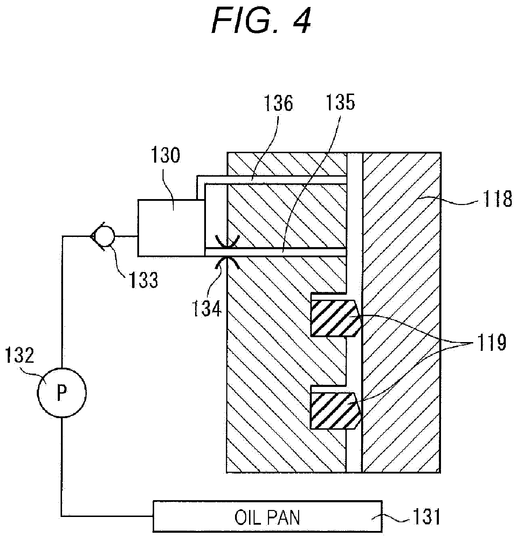

In a third embodiment, a preferred example of an oil supply mechanism to a high-pressure gas seal 119 will be described. Fig. 4 is a schematic diagram of an oil supply mechanism according to the third embodiment.

The oil supply mechanism of Fig. 4 uses an oil pump-type oil circulation system. The oil supply mechanism has a configuration in which oil used to lubricate the high-pressure gas seal 119 is collected into an oil pan (oil collection unit) 131 (which may be an oil tank), and the oil pan 131 and an gas seal oil feed tank (oil feed tank) 130 are connected via a high-pressure oil pump (oil pump) 132 and a check valve 133. The gas seal oil feed tank 130 is connected to an oil communication path 135 for supplying oil to the portion above the high-pressure gas seal 119 via a throttle 134 and to a communication port 136 for balancing the pressure with a high-pressure space 115.

In the oil supply mechanism of Fig. 4, the high-pressure oil pump 132 is operated constantly or periodically, and a certain amount of oil is fed from the oil pan 131 to the gas seal oil feed tank 130. Then, the oil in the gas seal oil feed tank 130 is fed from the oil communication path 135 to the high-pressure gas seal 119. At this time, the oil is supplied from the oil communication path 135 to the portion above the high-pressure gas seal 119, that is, to the high-pressure space 115. However, if the high-pressure gas seal 119 is configured as illustrated in Fig. 3B, the oil accumulated on the portion above the high-pressure gas seal 119 is transferred from the high-pressure side to the low-pressure side along with the reciprocating motion of the piston rod 118, and the oil does not stay in the high-pressure space 115.

The oil supply mechanism of Fig. 4 can stably supply the oil to the high-pressure gas seal 119 regardless of the engine operating state (rotation speed) by using the oil pump-type oil circulation system, as compared with using the splashing-type oil circulation system.

### [Fourth Embodiment]

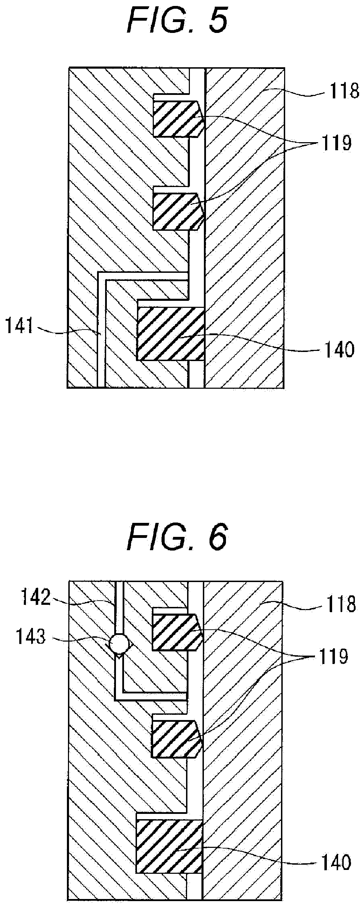

Foreign matter (contaminants) may be included in the lubricating oil. In particular, in the case of adopting the splash-type oil supply mechanism, foreign matter may reach a high-pressure gas seal 119, so that the high-pressure gas seal 119 may wear out by sandwiching the foreign matter, or the foreign matter may intrude into a high-pressure space 115. Therefore, as illustrated in Fig. 5, a dust seal 140 is arranged under the high-pressure gas seal 119 (on the low-pressure side with respect to the high-pressure gas seal 119), and foreign matter in the oil is removed by the dust seal 140 before the foreign matter reaches the high-pressure gas seal 119.

However, simply providing the dust seal 140 makes the oil accumulated above the dust seal 140 unlikely to flow to the lower portion (the dust seal 140 reduces the speed at which the oil adhering to the surface of the piston rod 118 flows downward). Therefore, the use of the dust seal 140 may cause a phenomenon in which oil is accumulated between the dust seal 140 and the high-pressure gas seal 119 to increase the oil pressure (oil accumulation pressure). In addition, the high-pressure gas seals 119 may be provided in multiple stages (two stages in Fig. 5) in order to extend the maintenance interval of the components. In this case, however, oil accumulation pressure may be generated between the high-pressure gas seals 119 arranged in the multiple stages. When such an oil accumulation pressure is generated, the high-pressure gas seal 119 may be inclined from an appropriate posture due to the oil pressure, whereby the sealing property of the high-pressure gas seal 119 is deteriorated or abnormal wear of the high-pressure gas seal 119 occurs.

Therefore, the oil supply mechanism in Fig. 5 has a configuration in which a communication path (first communication path) 141 is provided between the dust seal 140 and the high-pressure gas seal 119 to connect the side above the dust seal 140 and a low-pressure space 114. In this configuration, the oil accumulated above the dust seal 140 is released to the low-pressure space 114 through the communication path 141, so that it is possible to prevent the oil accumulation pressure. As a result, the posture of the high-pressure gas seal 119 can be stabilized, good sealing performance can be secured, and abnormal wear of the high-pressure gas seal 119 can be prevented.

If the high-pressure gas seals 119 are provided in multiple stages, in order to prevent the oil accumulation pressure between the high-pressure gas seals 119, a communication path (second communication path) 142 may be provided to connect a portion between the high-pressure gas seals 119 and the high-pressure space 115, and a check valve 143 may be provided on the communication path 142 as shown in Fig. 6 In the configuration of Fig. 6, it is possible to prevent the accumulation pressure between the high-pressure gas seals and also return the working fluid having intruded into between the high-pressure gas seals 119 to the high-pressure space 115, so that the gas sealing property of the high-pressure space 115 can be secured.

### [Fifth Embodiment]

In a Stirling engine 10, a part of the amount of heat absorbed from a high-temperature heat source is released to an external environment via a cooler heat exchanger 14. In an exhaust heat recovery Stirling engine intended for exhaust heat recovery in a factory or the like, as a method for using cooler cooling water, external cooling water from installed equipment (customer-side equipment) and a circulation system thereof are generally used. However, such a method causes a burden on the customer, such as cost of cooling water and modification of customer-side equipment (modification of facility for supplying cooling water to the cooler heat exchanger 14).

On the other hand, the Stirling engine 10 uses a cylinder block of a general-purpose internal combustion engine as a part of the configuration, and usually a diesel engine or the like includes a cooling water circulation system as an existing system. In relation to a fifth embodiment, a Stirling engine 10 including a cooling water circulation system using existing components of a general-purpose internal combustion engine will be described.

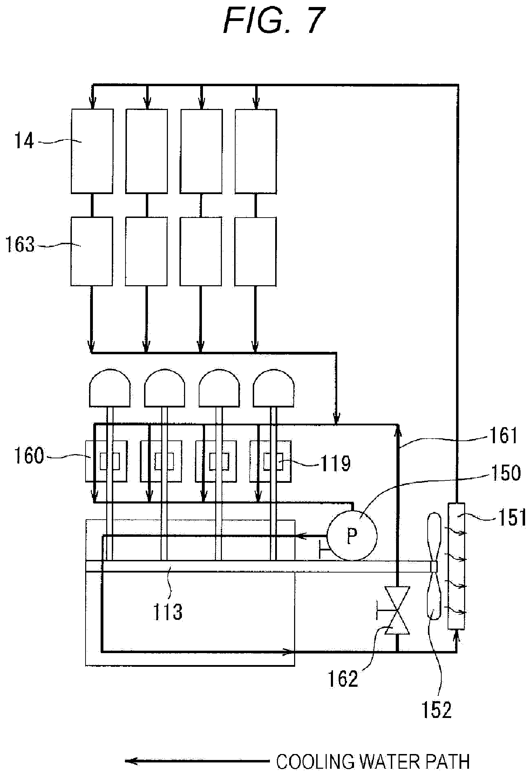

Fig. 7 is a schematic diagram illustrating a cooling water circulation system according to the fifth embodiment. The cooling water circulation system of Fig. 7 uses a circulation pump 150, a radiator 151, and a cooling fan 152, as existing components of the general-purpose internal combustion engine. The circulation pump 150 is a drive source for circulating cooling water. The radiator 151 is a heat exchanger for radiating heat from the cooling water. The cooling fan 152 applies wind to the radiator 151 to promote heat dissipation, and is connected to one end of a crankshaft 113. The cooling water circulation system has a cooling water path capable of supplying cooling water to at least a cooler heat exchanger 14.

As illustrated in Fig. 7, the Stirling engine 10 according to the fifth embodiment has the cooling water path capable of supplying cooling water to at least the cooler heat exchanger 14. In addition, the cooling water circulation system includes the radiator 151 and the cooling fan 152 to circulate the cooling water, and does not require external cooling water. This eliminates the necessity for the cost of the cooling water, the remodeling of the customer side facility, and the like.

The cooling water circulation system according to the fifth embodiment can also be used for cooling the components other than the cooler heat exchanger 14. For example, the cooling water circulation system can also be used for cooling a high-pressure gas seal 119 and cooling cylinders 111 in a high-pressure space 115.

Since the resin-made high-pressure gas seal 119 has a high linear expansion coefficient, there is a concern that the resin-made high-pressure gas seal 119 is thermally expanded by frictional heat to increase the tightening force of a piston rod 118. In this case, the oil film thickness of the oil decreases, and premature wear of the seal occurs. Therefore, the temperature of the high-pressure gas seal 119 is preferably controlled within an appropriate temperature range according to the operating conditions.

In the cooling water circulation system of Fig. 7, a water cooling jacket 160 is provided around the high-pressure gas seal 119 and a cooling water path through which cooling water can also be supplied to the water cooling jacket 160 is formed. This restrains thermal expansion of the high-pressure gas seal 119. In the cooling water circulation system of Fig. 7, a bypass path 161 and a bypass valve 162 are provided in a part of the cooling water path.

In this example, the bypass path 161 is capable of bypass-supplying of cooling water at a temperature lower than that of the cooling water path joining the bypass path 161, on the upstream of the water cooling jacket 160. In this configuration, the high-pressure gas seal 119 can be adjusted to an appropriate temperature by regulating the opening degree of the bypass valve 162. Specifically, the cooling effect of the high-pressure gas seal 119 can be enhanced by increasing the opening degree of the bypass valve 162 and increasing the amount of cooling water supplied to the water cooling jacket 160 via the bypass path 161.

In the cylinder 111 in the high-pressure space 115 of the Stirling engine 10, oil lubrication cannot be performed on the piston 112, so that a metal ring used for an internal combustion engine cannot be used. Therefore, a resin ring having high individual lubricity is adopted for lubrication between the piston 112 and the inner wall of the cylinder 111. However, there is a risk that the resin ring may be lowered in strength or damaged by heat received from the high-pressure space 115.

Therefore, in the cooling water circulation system of Fig. 7, a water cooling jacket 163 for the high-temperature cylinder is provided around the cylinder 111, and a cooling water path through which the cooling water can also be supplied to the water cooling jacket 163 is formed. Accordingly, the resin ring used for lubricating the piston 112 can also be cooled by the cooling water circulation system, so that it is possible to prevent a decrease in strength and breakage of the resin ring.

In the example of Fig. 7, the cooling water path causes the cooling water having received heat dissipated from the radiator 151 to flow through the cooler heat exchanger 14, the water cooling jacket 163, and the water cooling jacket 160 in this order. In this case, the bypass path 161 is capable of bypass-supplying of the cooling water at a temperature lower than that after passing through the cooler heat exchanger 14 and the water cooling jacket 163, between the water cooling jacket 163 and the water cooling jacket 160.

The embodiments disclosed herein are illustrative in all respects and do not provide a basis for a limited interpretation. Therefore, the technical scope of the present invention is not to be construed only by the above-described embodiments, but is defined based on the description of the claims. In addition, the present invention includes all modifications equivalent in meaning and scope to the claims.

### LIST OF REFERENCE SIGNS

- 10: Stirling engine
- 11: Engine unit
- 111: Cylinder
- 111a: High-temperature chamber
- 111b: Low-temperature chamber
- 112: Piston
- 113: Crank shaft
- 114: Low-pressure space
- 115: High-pressure space
- 116: Crosshead portion
- 116a: Through hole
- 117: Connecting rod
- 118: Piston rod
- 119: High-pressure gas seal (gas seal)
- 120: O-ring
- 130: Gas seal oil feed tank (oil feed tank)
- 131: Oil pan (oil collection unit)
- 132: High-pressure oil pump (oil pump)
- 133: Check valve
- 134: Throttle
- 135: Oil communication path
- 136: Communication port
- 140: Dust seal
- 141: Communication path (first communication path)
- 142: Communication path (second communication path)
- 150: Circulation pump
- 151: Radiator
- 152: Cooling fan
- 160: Water cooling jacket
- 161: Bypass path
- 162: Bypass valve
- 163: Water cooling jacket
- 12: Heater heat exchanger
- 13: Regenerator
- 14: Cooler heat exchanger

## Claims

1. A Stirling engine comprising a crosshead mechanism,
wherein the Stirling engine comprises:
a high-pressure space in which a piston is driven by a heating/cooling cycle of a working fluid; and
a low-pressure space in which a crosshead portion connected to the piston via a piston rod and a crank mechanism that rotates a crankshaft along with movement of the crosshead portion are stored, and
a gas seal is provided around the piston rod at a partition between the low-pressure space and the high-pressure space such that a lip angle of a seal lip is made smaller on a high-pressure side than on a low-pressure side.

2. The Stirling engine according to claim 1, wherein the crosshead portion is provided with a through hole penetrating along a sliding direction of the crosshead portion.

3. The Stirling engine according to claim 1 or 2, wherein the crosshead portion does not include a seal ring between the crosshead portion and a cylinder liner that holds sliding of the crosshead portion.

4. The Stirling engine according to any one of claims 1 to 3, comprising a splash-type oil circulation system that splashes lubricating oil, accumulated in a lower portion of a crankcase, to an upper portion using rotation of the crankshaft,
wherein a dust seal is arranged at a lower stage of the gas seal, and
a first communication path that connects an upper side of the dust seal and the low-pressure space is provided between the dust seal and the gas seal.

5. The Stirling engine according to any one of claims 1 to 4, comprising a splash-type oil circulation system that splashes lubricating oil, accumulated in a lower portion of a crankcase, to an upper portion using rotation of the crankshaft,
wherein the gas seals are arranged in multiple stages, and a dust seal is arranged in a lower stage of the gas seal, and
a second communication path that connects a portion between the gas seals provided in the multiple stages and the high-pressure space, and a check valve arranged on the second communication path are provided.

6. The Stirling engine according to any one of claims 1 to 3, comprising:
an oil collection unit that collects lubricating oil used for lubricating the gas seal; and
an oil feed tank that is connected to the oil collection unit via an oil pump and a check valve and into which the lubricating oil is fed from the oil collection unit by the oil pump,
wherein the oil feed tank is configured to feed the lubricating oil to the gas seal from above.

7. The Stirling engine according to any one of claims 1 to 6, wherein
a water cooling jacket is provided around the gas seal, and
a cooling water circulation system capable of supplying cooling water to the water cooling jacket is provided.

8. The Stirling engine according to claim 7, wherein
the cooling water circulation system includes a bypass path and a bypass valve arranged on the bypass path, and
a temperature of the cooling water supplied to the water cooling jacket is adjustable by adjusting an opening degree of the bypass valve.
